# EUROPÄISCHE PATENTANMELDUNG

(11) **EP 0 786 886 A2**
(43) Veröffentlichungstag der Anmeldung: **30.07.1997**
(21) Anmeldenummer: 97200140.8
(22) Anmeldetag: 17.01.1997
(51) Int. Cl.: H04L 25/02

(54) **Schaltungsanordnung zum Übertragen von binären Daten mittels differentieller Signale**

(30) Priorität: 25.01.1996 DE 19602605
(71) Anmelder: Philips Patentverwaltung GmbH, 22335 Hamburg (DE); PHILIPS ELECTRONICS N.V., 5621 BA Eindhoven (NL)
(72) Erfinder: Bühring, Peter, 22523 Hamburg (DE)
(74) Vertreter: Poddig, Dieter, Dipl.-Ing.

(57) **Zusammenfassung**

Bei der Übertragung von Daten durch differentielle Signale über zwei Leitungen sind diese Leitungen über Widerstände mit verschiedenen Spannungen verbunden, die den einen binären Wert der Daten darstellen. Zum Übertragen des anderen Werts werden bei bekannten Schaltungen die beiden Leitungen über getrennte Schalter mit entsprechenden entgegengesetzten Spannungen verbunden. Da diese getrennten Schalter fast nie exakt gleichzeitig schalten, sind die Flanken auf beiden Leitungen gegeneinander zeitverschoben und erzeugen damit elektromagnetische Störsignale. Um derartige Störsignale zu vermeiden, werden erfindungsgemäß beide Leitungen durch einen zwischen beiden Leitungen angeordneten Schalttransistor verbunden. Dadurch treten die Signalflanken auf beiden Leitungen zwangsläufig gleichzeitig auf und kompensieren ihre Wirkung auf elektromagnetische Störstrahlung weitgehend. Es werden verschiedene Realisierungen des Schalters zwischen den beiden Leitungen durch selbstsperrende MOS-Transistoren beschrieben.

## Beschreibung

Die Erfindung bezieht sich auf die Übertragung von binären Daten mittels differentieller Signale über einen zwei Leitungen enthaltenden Bus.

Die Übertragung von Daten mittels differentieller Signale ist bekanntlich sehr störsicher, wenn im Empfänger nur die Differenz der Spannungen auf beiden Leitungen ausgewertet wird, weil Störsignale, die auf beide Leitungen eingekoppelt werden, die Spannungen auf beiden Leitungen gleichsinnig verändern, so daß die Differenz im wesentlichen konstant bleibt. Auch ein begrenzter Offset der Bezugsspannungen zwischen Sender und Empfänger wird durch die differentielle Auswertung der Spannungen auf beiden Leitungen ausgeglichen.

Ein weiterer Vorteil der Übertragung von Daten mittels differentieller Signale besteht darin, daß elektromagnetische Störungen weitgehend vermieden werden, da eine Signalflanke auf einer der Leitungen durch eine gegenphasige Signalflanke auf der anderen Leitung weitgehend kompensiert wird. Dies gilt jedoch nur, wenn beide Flanken genau gleichzeitig auftreten.

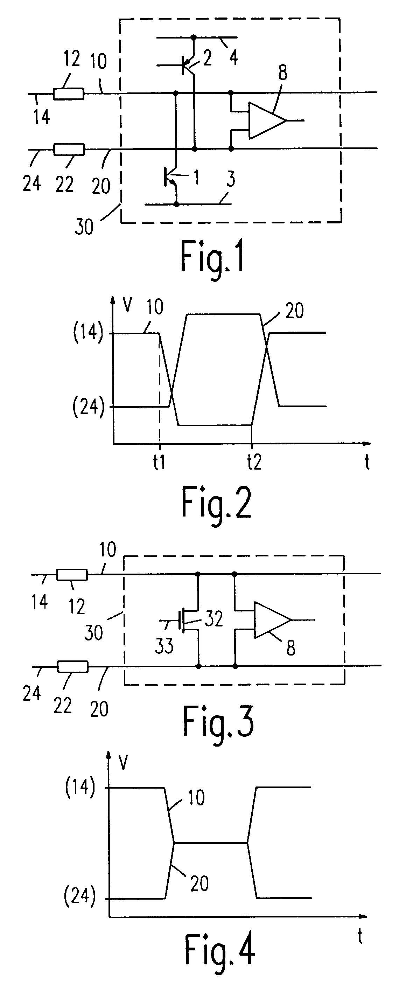

Für die Übertragung von Daten mittels differentieller Signale sind verschiedene Normen geschaffen worden, insbesondere die ISO11519-2, die grundsätzlich die Signalspannungen auf den beiden Leitungen bei den beiden Werten der übertragenen binären Daten definiert. In Fig. 1 ist die grundsätzliche Schaltung für die beiden Leitungen 10 und 20 des Busses angedeutet. Die Leitung 10 ist über einen Widerstand 12 mit einer Spannung 14 gekoppelt, die etwas niedriger als die Betriebsspannung ist. Die Leitung 20 ist über einen Widerstand 22 mit einer zweiten Spannung 24 gekoppelt, die etwas höher als die Bezugsspannung, jedoch wesentlich niedriger als die Spannung 14 ist. An den Bus mit den Leitungen 10 und 20 sind eine Anzahl Busteilnehmer angeschlossen, von denen wenigstens ein Teil der Teilnehmer einen Sender und einen Empfänger enthalten, wobei in Fig. 1 mit 30 der Sender und Empfänger eines Busteilnehmers angedeutet ist. Der Empfänger umfaßt einen Verstärker 8, der die Differenz der Spannungen auf beiden Leitungen 10 und 20 auswertet und einer nicht dargestellten Verarbeitungsanordnung zuführt. Der Sender umfaßt eine Schalteranordnung mit zwei Transistoren 1 und 2, von denen der Transistor 1 die Leitung 10 mit der Bezugsspannung 3 und der Transistor 2 die Leitung 20 mit der Betriebsspannung 4 koppelt, wenn beide Transistoren angesteuert werden.

Der Verlauf der Spannungen auf den Leitungen 10 und 20 bei Übertragung von Daten ist in dem Diagramm der Fig. 2 angedeutet. Vor dem Zeitpunkt t1 sind beide Transistoren 1 und 2 gesperrt, und die Leitung 10 liegt auf der hohen Spannung 14 und die Leitung 20 auf der niedrigeren Spannung 24. Zum Zeitpunkt t1 werden beide Transistoren 1 und 2 im wesentlichen gleichzeitig eingeschaltet. Dabei ist eine Ansteuerung für ein echtes gleichzeitiges Einschalten beider Transistoren schwierig zu erreichen, hinzu kommt, daß die Einschaltverzögerung beider Transistoren häufig etwas unterschiedlich ist. Dadurch wird die Spannung auf der Leitung 10 zum Zeitpunkt t1 niedrig, während die Spannung auf der Leitung 20 mit einer gewissen kleinen Verzögerung hoch geht. Entsprechend geht zum Zeitpunkt t2 die Spannung auf der Leitung wieder hoch, und die Spannung auf der Leitung 20 wird mit einer kleinen Verzögerung wieder niedrig. Diese Verzögerungen zwischen beiden Flanken lassen sich praktisch kaum vermeiden. Die Folge dieser Verzögerung ist, daß die beiden Flanken sich bezüglich der elektromagnetischen Abstrahlung des Busses mit den beiden Leitungen 10 und 20 nicht genau kompensieren und somit ein Störsignal bei jeder Flanke auf den beiden Leitungen 10 und 20 ausgeht.

Aufgabe der Erfindung ist es, eine Schalteranordnung für einen Sender anzugeben, durch die die elektromagnetische Abstrahlung von dem Bus mit den beiden Leitungen wesentlich verringert wird.

Diese Aufgabe wird erfindungsgemäß dadurch gelöst, daß die Schalteranordnung direkt zwischen den beiden Leitungen angeordnet ist, so daß die Flanken auf beiden Leitungen zwangsläufig genau übereinstimmen. Wenn die zwischen beiden Leitungen angeordnete Schalteranordnung offen, d.h. nicht leitend ist, liegen die beiden Leitungen im wesentlichen auf den Spannungen, mit denen sie gekoppelt sind. Wenn die Schalteranordnung geschlossen, d.h. leitend geschaltet wird, gehen beide Leitungen auf eine Spannung, die etwa in der Mitte der beiden Spannungen 14 und 24 liegt, und zwar zwangsläufig gleichzeitig. Dadurch wird eine elektromagnetische Abstrahlung von dem Zweidraht-Bus weitgehend vermieden.

Es sei bemerkt, daß die Signale auf den beiden Leitungen des Busses bei Anwendung der erfindungsgemäßen Schaltung nicht mehr der Norm ISO11519-2 entsprechen.

Gemäß einer Ausführungsform der Erfindung enthält die Schalteranordnung nur einen Transistor, der zwischen den beiden Leitungen geschaltet ist. Vorzugsweise ist dieser Transistor als selbstsperrender MOS-Transistor ausgeführt, dessen Steueranschluß über einen Widerstand mit einer der Leitungen verbunden ist. Bei Realisierung als n-leitender MOS-Transistor ist der Widerstand mit der Leitung verbunden, die bei gesperrtem Transistor die niedrigere Spannung führt, und bei einem p-leitenden MOS-Transistor ist der Widerstand mit der Leitung mit der höheren Spannung verbunden. Zum Ansteuern des Transistors wird zweckmäßig ein Steuertransistor verwendet, der den Steueranschluß des Transistors mit einer Spannung koppelt, die genügend außerhalb des Spannungsbereichs liegt, der durch die beiden Spannungen gegeben ist, mit denen die beiden Leitungen gekoppelt sind, um den Transistor zuverlässig einzuschalten.

Wenn bei einem Sender in einem Busteilnehmer und einem Empfänger in einem anderen Busteilnehmer ein großer Offset in den Bezugsspannungen auftritt, kann eine derartige Schalteranordnung möglicherweise nicht ausreichen, um den Transistor zuverlässig einschalten zu können. In diesem Falle ist es zweckmäßig, zwei selbstsperrende MOS-Transistoren unterschiedlichen Leitungstyps zu verwenden, die parallel zwischen die beiden Leitungen geschaltet werden. Jeder dieser Transistoren wird dann ebenso angeschlossen wie der vorher erwähnte einzelne Transistor des entsprechenden Leitungstyps, d.h. der Steueranschluß wird über einen Widerstand mit einer der Leitungen und über einen Steuertransistor mit einer weiteren Spannung gekoppelt, wobei die Steuertransistoren beider Transistoren gegenphasig angesteuert werden. Eine Verzögerung beim Leitendwerden des einen Transistors gegenüber dem anderen wirkt sich dann nicht als Zeitunterschied in den Signalflanken auf den Leitungen aus, sondern der jeweils später schaltende Transistor ist dann für die Flanken auf den Leitungen im wesentlichen wirkungslos. Bei dieser Verwendung von zwei Transistoren parallel kann jedoch eine wesentlich größerer Offset der Bezugsspannung des Senders gegenüber den Spannungen, mit denen die Leitungen gekoppelt sind, verarbeitet werden.

Die Erfindung betrifft ferner eine integrierte Schaltung sowie einen Sender mit wenigstens einer erfindungsgemäßen Schaltungsanordnung.

Ausführungsbeispiele der Erfindung werden nachfolgend anhand der weiteren Figuren der Zeichnung erläutert. Es zeigen:
Fig. 3 den prinzipiellen Aufbau einer erfindungsgemäßen Schalteranordnung,
Fig. 4 ein Zeitdiagramm der Spannungen auf den beiden Leitungen,
Fig. 5 die Ansteuerung eines als N-leitenden MOS-Transistor ausgeführten Schalters,
Fig. 6 die Ansteuerung eines als P-leitender MOS-Transistor ausgeführten Schalters,
Fig. 7 die Verwendung von zwei Transistoren unterschiedlichen Leitungstyps und deren Ansteuerung.

In Fig. 3 sind die wesentlichen Elemente eines Senders und Empfängers eines Busteilnehmers 30 dargestellt. Der Sender umfaßt einen MOS-Transistor 32, dessen Hauptanschlüsse mit den beiden Leitungen 10 und 20 des Busses verbunden sind. Über den Steueranschluß 33 des Transistors 32 kann dieser leitend geschaltet oder gesperrt werden. Ein Verstärker 31 wertet als Empfänger wieder die Differenz zwischen den Spannungen auf den beiden Leitungen 10 und 20 aus.

Der Verlauf dieser Spannungen bei der Übertragung von Daten ist in dem Diagramm in Fig. 4 dargestellt. Solange der Transistor 32 gesperrt ist, hat die Spannung auf der Leitung 10 einen hohen und auf der Leitung 20 einen niedrigen Wert, nämlich im wesentlichen den Wert der Spannungen 14 bzw. 24. Wenn der Transistor 32 durch entsprechende Ansteuerung des Steueranschlusses 33 leitend geschaltet wird, nimmt die Spannung auf beiden Leitungen 10 und 20 einen mittleren Wert zwischen den Spannungen 14 und 24 an, da die Widerstände 12 und 22 im wesentlichen gleichen Wert haben. Die Flanken beider Spannungssignale sind also zwangsläufig genau gleichzeitig, so daß nur eine geringe elektromagnetische Abstrahlung auftreten kann.

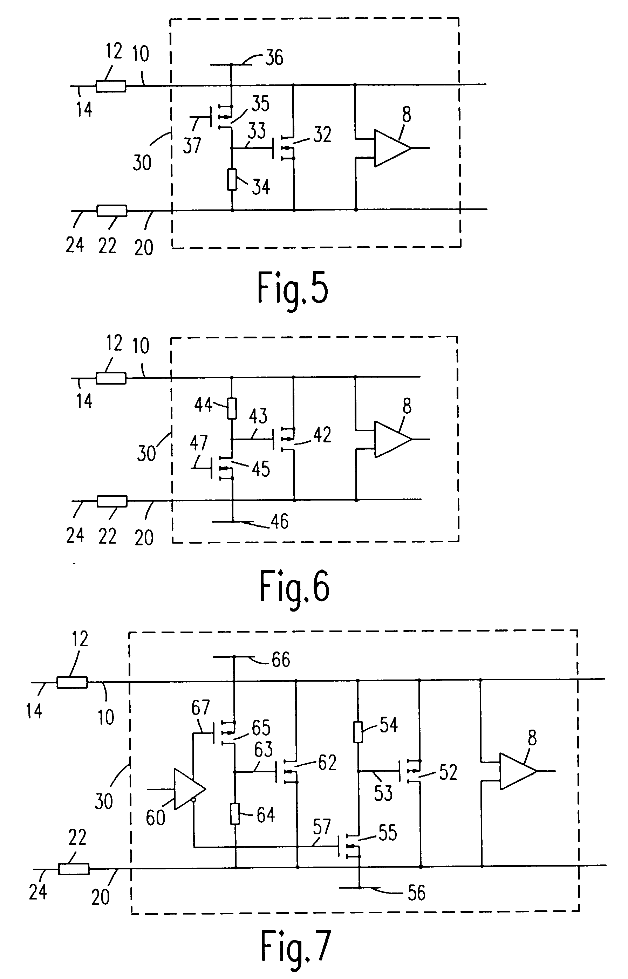

In Fig. 5 ist eine Anordnung dargestellt, bei der der Transistor 32 als selbstsperrender N-Kanl-MOS-Transistor ausgeführt ist. Die Hauptanschlüsse des Transistors 32 sind mit den Leitungen 10 und 20 verbunden. Der Steueranschluß 33 ist über einen Widerstand 34 mit der Leitung 20 und über einen Steuertransistor 35 mit einer Spannung 36 verbunden. Der Steuertransistor 35 ist hier ein selbstsperrender P-Kanal-MOS-Transistor mit einem Steueranschluß 37. Wenn diesem Steueranschluß 37 eine hohe Spannung, insbesondere eine Steuerspannung entsprechend der Betriebsspannung 36 zugeführt wird, ist der Steuertransistor 35 gesperrt, und der Steueranschluß 33 des Transistors 32 liegt auf dem Potential der Leitung 20 und ist somit ebenfalls gesperrt. Wenn dem Steueranschluß 37 des Steuertransistors 35 jedoch eine niedrige Steuerspannung zugeführt wird, wird der Steueranschluß 33 des Transistors 32 auf die Spannung 36 gebracht und damit eingeschaltet. Dies gilt auch, wenn ein Offset zwischen dem Bezugspunkt der Spannungen 14 und 24 und dem Bezugspunkt der Spannung 36 auftritt, so lange dieser Offset so klein bleibt, daß der Mittelwert der Spannungen auf den Leitungen 10 und 20 um die Schwellspannung des Transistors 32 unter der Spannung 36 bleibt.

Fig. 6 zeigt eine entsprechende Schaltung, bei der der zwischen den Leitungen 10 und 20 geschaltete Transistor 42 ein selbstsperrender P-Kanal-MOS-Transistor 42 ist. Dessen Steueranschluß 43 ist über einen Widerstand 44 hier mit der Leitung 10 und über einen Steuertransistor 45 mit vorzugsweise dem Bezugspotential 46 des Busteilnehmers 30 verbunden. Der Steuertransistor 45 ist hier als selbstsperrender N-Kanal-MOS-Transistor ausgeführt. Wenn dessen Steueranschluß 47 eine niedrige Spannung zugeführt wird, ist der Steuertransistor 45 und damit auch der Transistor 42 gesperrt. Durch eine hohe Spannung am Steueranschluß 47 wird der Steuertransistor 45 leitend und schaltet damit auch den Transistor 42 ein. Dies gilt, solange der Offset zwischen der Bezugsspannung der Spannungen 14 und 24 und der Bezugsspannung 46 nicht so groß wird, daß der Mittelwert der Spannungen auf den Leitungen 10 und 20 um den Schwellwert des Transistors 42 niedriger wird als die Bezugsspannung 46.

In Fig. 7 sind zwei Transistoren 52 und 62 parallel mit ihren Hauptanschlüssen mit den beiden Leitungen 10 und 20 verbunden. Der Transistor 52 ist ein selbstsperrender P-Kanal-MOS-Transistor, dessen Steueranschluß 53 in gleicher Weise beschaltet ist wie in Fig. 6 angegeben. Der Transistor 62 ist ein N-Kanal-MOS-Transistor, dessen Steueranschluß 63 in gleicher Weise wie in Fig. 5 dargestellt beschaltet ist. Die Steueranschlüsse 57 und 67 der Steuertransistoren 55 und 65 werden über einen Verstärker 60 gegenphasig angesteuert und koppeln die Steueranschlüsse 53 bzw. 63 mit der Bezugsspannung 56 bzw. der Betriebsspannung 66. Bei dieser Schaltung ist auch bei einem nahezu beliebig großen Offset zwischen der Bezugsspannung der Spannungen 14 und 24 und der Bezugsspannung 56 einer der beiden Transistoren 52 oder 62 zuverlässig einschaltbar. Wenn beispielsweise die Bezugsspannung 56 positiv gegenüber der Bezugsspannung der Spannungen 14 und 24 verschoben ist, z.B. daß die Spannung auf der Leitung 20 negativer ist als die Bezugsspannung auf der Leitung 56, so kann in jedem Falle der Transistor 62 leitend geschaltet werden. Bei einer umgekehrten Verschiebung der Bezugsspannungen gegeneinander kann der Transistor 52 zuverläsig leitend geschaltet werden. Ohne eine solche Verschiebung, die beispielsweise durch große Ströme auf den Bezugsleitungen oder durch Störsignale entstehen kann, können beide Transistoren 52 und 62 eingeschaltet werden. Dabei wirkt sich eine Einschaltverzögerung zwischen beiden Transistoren nicht auf die Symmetrie der Flanken der Signale auf den beiden Leitungen 10 und 20 aus, denn der später schaltende Transistor verbindet dann lediglich die Leitungen 10 und 20, die in diesem Augenblick durch den früheren Transistor bereits auf gleiche Spannung gebracht sind.

## Patentansprüche

1. Schaltungsanordnung zum Übertragen von binären Daten von einem Sender zu einem Empfänger mittels differentieller Signale über eine erste und eine zweite Leitung, von denen die erste Leitung mit einer ersten Spannung und die zweite Leitung mit einer davon unterschiedlichen zweiten Spannung gekoppelt ist, um den einen Wert der binären Daten anzugeben, und beide Leitungen im Sender mit einer Schalteranordnung gekoppelt sind, um durch Ansteuerung dieser Schalteranordnung beide Leitungen auf eine andere Spannung zu legen, die den anderen Wert der binären Daten angeben, dadurch gekennzeichnet,
daß die Schalteranordnung (32; 42; 52, 62) zwischen beiden Leitungen (10, 20) angeordnet ist, um bei Ansteuerung beide Leitungen (10, 20) auf eine im wesentlichen gleiche Spannung zu schalten.

2. Schaltungsanordnung nach Anspruch 1, dadurch gekennzeichnet,
daß die Schalteranordnung einen Transistor (32, 42) mit zwei Hauptanschlüssen und einem Steueranschluß (33, 43) enthält, wobei die Hauptanschlüsse je mit einer anderen der beiden Leitungen (10, 20) verbunden sind.

3. Schaltungsanordnung nach Anspruch 2, dadurch gekennzeichnet,
daß der Transistor (32, 42) ein selbstsperrender MOS-Transistor des einen Leitungstyps ist und daß der Steueranschluß (33, 43) des Transitors (32, 42) über einen Widerstand (34, 44) mit einer der Leitungen (20, 10) verbunden und über einen Steuertransistor (35, 45) mit einer dritten Spannung (36, 46) gekoppelt ist, die außerhalb des durch die erste und die zweite Spannung (14, 24) gegebenen Bereichs liegt.

4. Schaltungsanordnung nach Anspruch 1, dadurch gekennzeichnet,
daß die Schalteranordnung zwei als selbstsperrende MOS-Transistoren (52, 62) unterschiedlichen Leitungstyps mit je zwei Hauptanschlüssen und einem Steueranschluß (53, 63) enthält, wobei die Hauptanschlüsse beider MOS-Transistoren (52, 62) je mit einer anderen der beiden Leitungen (10, 20) verbunden sind und der Steueranschluß (53) des einen MOS-Transistors (52) über einen ersten Steuertransistor (55) mit einer dritten Spannung (56) und der Steueranschluß (63) des anderen MOS-Transistors (62) über einen zweiten Steuertransistor (65) mit einer vierten Spannung (66) gekoppelt ist, von denen die dritte und die vierte Spannung (55, 65) zu beiden Seiten außerhalb des durch die erste und die zweite Spannung (14, 24) gegebenen Bereichs liegt, und wobei die Steuertransistoren (55, 65) von unterschiedlichem Leitungstyp sind, um gegenphasig angesteuert zu werden.

5. Integrierte Schaltung mit wenigstens einer Schaltungsanordnung nach einem der Ansprüche 1 bis 4.

6. Sender für einen Zweidraht-Bus zur Übertragung differentieller Signale mit wenigstens einer Schaltungsanordnung nach einem der Ansprüche 1 bis 4.
